Europäisches Patentamt

(19) European Patent Office

Office européen des brevets

(11) Publication number: **0 160 482**
**B1**

(12)  EUROPEAN PATENT SPECIFICATION

(45) Date of publication of patent specification: **11.01.89**

(51) Int. Cl.⁴: **B 01 J 23/42, B 01 D 53/34, B 01 J 21/10**

(21) Application number: **85302799.3**

(22) Date of filing: **22.04.85**

(54) Catalyzed diesel exhaust particulate filter.

(30) Priority: **23.04.84 US 602783**

(43) Date of publication of application:
**06.11.85 Bulletin 85/45**

(45) Publication of the grant of the patent:
**11.01.89 Bulletin 89/02**

(84) Designated Contracting States:
**AT BE CH DE FR GB IT LI LU NL SE**

(56) References cited:
**DE-A-2 304 001**
**DE-A-3 141 713**

**PATENT ABSTRACTS OF JAPAN, vol. 8, no. 122 (C-227)1559r, 8th June 1984; & JP - A - 59 036 543 (KIYATARAA KOGYO K.K.) 28-02-1984**

(73) Proprietor: **ENGELHARD CORPORATION**
**70 Wood Avenue South CN 770**
**Iselin New Jersey 08830 (US)**

(72) Inventor: **Dettling, Joseph C.**
**8 Spicy Pond Road**
**Howell New Jersey (US)**
Inventor: **Skomoroski, Robert**
**350 East 25th Street**
**Paterson New Jersey (US)**

(74) Representative: **Colgan, Stephen James et al**
**CARPMAELS & RANSFORD 43 Bloomsbury Square**
**London WC1A 2RA. (GB)**

Courier Press, Leamington Spa, England.

## Description

Background of the invention

1. Field of the invention

This invention relates to diesel engine exhaust gas treatment and more particularly to the filtering of particulates from diesel engine exhaust gases using a catalyzed filter.

2. The prior art

The question of how best to reduce the levels of particulate matter expelled to the atmosphere in the exhaust gases of diesel engines is currently of considerable interest. In this connection, it is desired to develop efficient and practical devices for removing substantial portions of particulates from the exhaust gases in diesel engine exhaust systems before permitting the exhaust gases to escape to the atmosphere.

It is known in the art to provide diesel engines with an exhaust filter which traps particulates from the exhaust gas stream during engine operation. The filters are generally made of porous, solid materials having a plurality of pores extending therethrough and having small cross-sectional size, such that the filter is permeable to the exhaust gases which flow through the filters and are capable of restraining most or all of the particulates from passing through the filter with the gas. The restrained particulates consist generally of carbonaceous particulates in the form of soot particles. As the mass of collected particulates increases, the flow rate of the exhaust gas through the filter is usually impeded, whereby an increased back pressure is encountered within the filter and reduced engine efficiency results. At this point, the filter is either discarded as a disposable/replaceable element or removed and regenerated by burning the collected particles off at temperatures in excess of 510°C so that the filter can be reused.

There is a desire in the art to more simply regenerate the particulate filter by continuous burn-off or incineration of the soot particles as they are trapped in the filter. However, experience has shown that in normal diesel engine operation, the temperature in the exhaust system varies substantially under different conditions of engine load and speed and that the temperatures in the filter hardly ever reach the 510°C temperature level required to incinerate the trapped particulate.

The art, e.g. US—A—4,319,896, has attempted to rectify this situation by the use of a filter which embodies a catalytic material which raises the temperature of the hot exhaust gas stream. The art is not specific as to the catalytic materials, but teaches that, even at the raised exhaust temperatures effected by the use of these unspecified catalytic materials, these temperatures are still too low to effectively ignite the carbon particles retained in the filter. To effect burn-off of the particles in the filter, the filter must be periodically heated by electrical means to a temperature sufficiently high to burn off the retained soot. Even the use of an electrical burn-off device involves risk, for as noted in US—A—4,319,896, care must be exercised during burn-off of the soot particles as the possibility exists that there will be too rapid a burning of the particulate and the filter may be heated to an excessively high temperature which can adversely damage the filter.

A recently published West German Patent Application DE—A—3141713 (May, 1983) indicates that the use of a particulate filter which embodies a silver vanadate catalyst on a transition metal carrier such as aluminum oxide, silicon dioxide, titanium dioxide, zirconium dioxide and oxides of rare earth metals, lowers the temperature at which ignition of the trapped particulate is initiated.

There is a need in the art, and it is therefore an object of the present invention, to effect soot particle burn-off in the diesel engine exhaust particulate filter at normal engine operating exhaust gas temperatures.

It is a further object of the invention to provide means whereby the temperature at which soot particles may be incinerated can be lowered to a level more closely approximating the exhaust gas temperatures encountered in normal diesel engine operation whereby burn-off and incineration of the soot particles trapped in the filter may be readily achieved and excessive particulate build-up in the filter avoided without risk of damage to the filter.

Summary of the invention

These and other objects of the present invention are obtained by means of a filter device for use in the exhaust system of a diesel engine, wherein a filter element is provided with a catalyst mixture of a platinum group metal and an alkaline earth metal oxide. The presence of the catalyst mixture in the filter lowers the temperature at which ignition and incineration of the particulates collected on the filter walls may be effected so that continuous self-cleaning or regeneration of the filter may be accomplished at diesel exhaust gas temperatures encountered under certain diesel engine operating conditions whereby particulate plugging is avoided.

Brief description of the drawings

Figure 1 is a graph showing the backpressure buildup in a catalyzed diesel exhaust particulate filter when the diesel engine exhaust gas temperature is 260°C followed by the decrease in backpressure when the diesel engine operating conditions are changed so that the exhaust gas temperature is raised to 392°C at which temperature burnoff of the collected particulate is effected.

Figure 2 is a graph showing the backpressure buildup over time in a catalyzed diesel exhaust particulate filter when the exhaust temperature is 260°C followed by a decrease in backpressure over time when the diesel engine operating conditions are changed so that the exhaust gas temperature is raised to 355°C at which temperature burnoff of collected particulate is effected.

Figure 3 is a graph showing the variation in the backpressure of a catalyzed diesel exhaust particulate filter of the present invention when the temperature of the exhaust gas is varied over a 226—392°C temperature range.

Figure 4 is a graph showing the variation of backpressure over time with small variations in exhaust temperature from 322—362°C.

Detailed description of the invention

In the practice of the present invention, the catalyzed filter is placed in the filter housing mounted in the exhaust gas handling system of a diesel engine which includes an exhaust manifold. The filter and filter housing are placed, along with any other gas line elements which may be present, between the exhaust gas manifold of the engine and the end of the exhaust tailpipe which is open to the atmosphere, but preferably as close as possible to the engine exhaust manifold to benefit from the higher temperature. Within the filter housing is placed the high efficiency, self-cleaning, catalyzed filter element of the present invention which is adapted to collect particulates in the exhaust gases delivered to the filter housing from the engine manifold. The filter element may be formed of any porous high temperature material which is configured to trap and hold substantial quantities of particulates from the diesel engine exhaust gases without creating an excessive restriction to exhaust gas flow and able to withstand the elevated temperatures encountered in exhaust gases during engine operation and regeneration.

Filter elements which are mounted in the filter housing for filtering diesel engine exhaust particulates include thin, porous-walled honeycomb (monolith) or foam structures through which the exhaust gases pass without causing too great an increase of backpressure or pressure drop across the filter housing. Normally the presence of a clean filter element will create a backpressure of 1.0—10.0 kilopascal (kpa), kilopascal being defined as 1000 Newtons per meter squared, equivalent to 0.145 pounds per square inch which does not materially affect the operating efficiency of the diesel engine. These filters are generally fabricated from ceramics, generally crystalline, glass ceramics, glasses, metals, cermets, resins or organic polymers, papers, textile fabrics (with or without fillers) and combinations thereof. A detailed description of the variety of prior art diesel engine exhaust particulate filters which may be catalyzed in accordance with the practice of the present invention is disclosed in US—A—4,329,162, the disclosure of which is herein incorporated by reference.

In operation, exhaust gases emitted by the diesel engine are passed from the exhaust manifold through the exhaust pipe and the exhaust particulate filter housing wherein is mounted the catalyzed exhaust filter of the present invention. Within the filter, when the engine is cold or at low vehicle speeds, the exhaust gases pass through the porous walls where substantial portions of the particulates contained in the gases are collected on the catalyzed surfaces of the porous filter medium. At exhaust gas temperatures of about 375—400°C, which temperatures are reached under certain loads in a typical diesel passenger automobile, the particulate collected on the walls of the filter are ignited and the collected particulate is continuously incinerated at these exhaust temperatures. The cleaned exhaust gas then passes out of the filter to the remaining portions of the exhaust system from which it escapes to the atmosphere.

The catalyst of the present invention is characterized by a mixture of a platinum group metal such as platinum, palladium, rhodium and ruthenium and an alkaline earth metal oxide such as magnesium oxide, calcium oxide, strontium oxide or barium oxide with an atomic ratio between the platinum group metal and the alkaline earth metal of about 1:250 to about 1:1 and preferably about 1:60 to about 1:6.

Platinum is a preferred platinum group metal and magnesium oxide is preferred as the alkaline earth metal oxide component of the catalyst mixture of the present invention.

In preparing the catalyzed particulate filters of the present invention, the catalyst may be present in the form of a coating or film layer consisting of the mixture of platinum group metal and alkaline earth metal oxide at a coating weight or concentration of about 12 to about 900 grams per cubic foot (g/ft$^3$) (0.424 to 31.78 g/l) of unit filter volume of which about 2 to about 200 g/ft$^3$ (0.071 to 7.06 g/l) is comprised of the platinum group metal and preferably about 5 to about 150 g/ft$^3$ (0.177 to 5.297 g/l), and about 30 to about 1500 g/ft$^3$ (1.06 to 52.97 g/l) and preferably about 50 to about 900 g/ft$^3$ (1.766 to 31.78 g/l) of the alkaline earth metal oxide.

Depositing the catalyst mixture of the present invention on the porous walls of a filter element such as a monolithic ceramic material or a foam ceramic material can be carried out in any conventional manner. A preferred method of depositing the catalyst mixture on the surfaces of the filter element walls is to impregnate the filter element with an aqueous solution of a salt of the platinum group metal as well as an aqueous solution of a water soluble alkaline earth metal salt. This is best accomplished by bringing the filter element into contact with an aqueous solution of either the platinum group metal salt or alkaline earth metal salt or both by dipping the filter element in the solution or solutions, removing excess solution by draining and subsequent drying at 110°—150°C followed by calcining at 450°—600°C.

The present invention is illustrated by the following examples:

3

Example I

A series of Corning diesel particulate filter elements of 1.5 inch (3.8 cm) diameter and 3.0 inch (7.6 cm) length (5.3 in$^3$ (87.3 cm$^3$) volume) having a ceramic cordierite monolith structure of 10—40 μm pore size range, 200 cell/in$^2$ (31 cell/cm$^2$) cell density and a 12 mm wall thickness was selected for catalyst treatment in the following manner:

Eighty grams of Mg(NO$_3$)$_2$ · 6H$_2$O were dissolved in 250 cm$^3$ deionized water and the filter element immersed in the solution for 2 minutes. Following the removal of the filter element from the Mg(NO$_3$)$_2$ solution, excess solution was drained from the filter element and the filter element dried at 110°C for 2 hours. The dried filter element was calcined at 500°C for 15 minutes. After cooling to room temperature, the filter element was immersed in an aqueous solution containing 10 grams of platinum as H$_2$Pt(OH)$_6$ solubilized in an amine. The filter was removed from the platinum salt solution, drained of excess solution, dried at 110°C for 2 hours and then calcined at 500°C for 15 minutes. The cooled filter element was determined to contain 130 g/ft$^3$ (4.59 g/l) platinum and 196 g/ft$^3$ (6.92 g/l) MgO. The so catalyzed filter element was placed in a filter housing after weighing and exposed to the exhaust stream of a Daimler-Benz diesel engine. The filter elements were weighed and then placed in muffle furnaces heated to different temperatures, e.g. 400°C, 500°C, and 600°C for 1 hour at each temperature. The weight loss in the filter element was then determined. These data are recorded in Table I as the weight loss which occurred at each specific temperature.

The procedure of Example I was repeated with the exception that a Toyomenka foam cordierite ceramic particulate filter element of 1.5 inch (3.8 cm) diameter and 2.0 inch (5.1 cm) length (3.5 in$^3$ (57.35 cm$^3$) volume) of 20 cells/25 mm cell density/wall thickess was substituted for the ceramic monolith filter element. The catalyzed foam filter element was determined to contain 130 g/ft$^3$ (4.59 g/l) platinum and 881 g/ft$^3$ (31.11 g/l) MgO. The weight loss data for the catalyzed foam ceramic filter element is also recorded in Table I below.

For the purposes of comparison, the procedure of Example 1 was repeated with the exception that weight loss data was obtained for a ceramic monolith filter element which had not been catalyzed, designated by the symbol "C$_1$" and a ceramic monolith filter which had been catalyzed with a combination of platinum and palladium (designated by the symbol "C$_2$") the amount of catalyst present on the filter being about 130 g/ft$^3$ (4.59 g/l), the Pt/Pd ratio being 10/1. The weight loss data for filters C$_1$ and C$_2$ are also recorded in Table I below.

TABLE I

| Filter element | Type | Weight loss (grams) after heating at | | | |
|---|---|---|---|---|---|
| | | 400°C | 500°C | 600°C | Total loss |
| 1 | Ceramic monolith | 0.5 | 0 | 0.2 | 0.7 |
| 2 | Ceramic foam | 0.7 | 0.2 | 0.3 | 1.2 |
| C$_1$ | Ceramic monolith | 0.2 | 0 | 0.1 | 0.3 |
| C$_2$ | Ceramic monolith | 0.1 | 0.1 | 0.4 | 0.6 |

By reference to Table I, it is immediately apparent that the catalyzed filter elements 1 and 2 had lost considerably more weight (greater burn-off of particulate) than the uncatalyzed filter element (C$_1$) or the filter element catalyzed only with platinum group metal (C$_2$).

Example II

Catalyzed ceramic monolith filter elements prepared in accordance with Example I were placed in filter housings mounted on the right and left exhaust pipes of a Deutz F8L-413 8 cylinder diesel engine, through which the exhaust gases from the engine manifold were required to pass. The engine was operated with a dynamometer. Experience had shown that in normal engine operation, the temperature in the exhaust system varies substantially under different conditions of engine load and speed. Using the above test arrangement, it had been determined that when using an uncatalyzed ceramic monolith filter element, it was necessary to heat the filter element to a temperature of at least 510°C to regenerate a plugged filter.

To test the effectiveness of the catalyzed filter element, the dynamometer was operated at an engine speed of 2200 rpm and a load of 183 Newton meters (N.m.) torque which could be associated with a vehicle road speed of about 50 mph (80.45 km/h) for a typical heavy duty diesel vehicle on a horizontally level road surface. The filter housings in which the catalyzed filter elements were placed were located about one meter downstream from the exhaust manifold. The exhaust gas temperature was 260°C.

Backpressure caused by (or pressure drop across) the filter elements was measured over an eight hour period wherein the backpressure increased at the rate of 0.178 kPa/hour in the right catalyzed filter and 0.211 kPa/hour for the left catalyzed filter due to the buildup and accumulation of particulate in the filter elements. After the backpressure in the filter elements rose to about 8—9 kPa, the torque was raised to 406 N.m. The increased load caused the exhaust gas temperature to be raised to 392°C. At this exhaust gas temperature, the backpressure dropped to a lower steady state level within 20—40 minutes indicating that burn-off of particulate collected in the filter had occurred. The backpressure in the right filter element when it was clean, i.e., substantially free of particulate, was determined to be 6.1 kPa at an engine speed of 2200 rpm and a torque of 183 N.m. (260°C exhaust gas temperature) and the backpressure of the clean left filter under these same conditions was about 5.3 kPa.

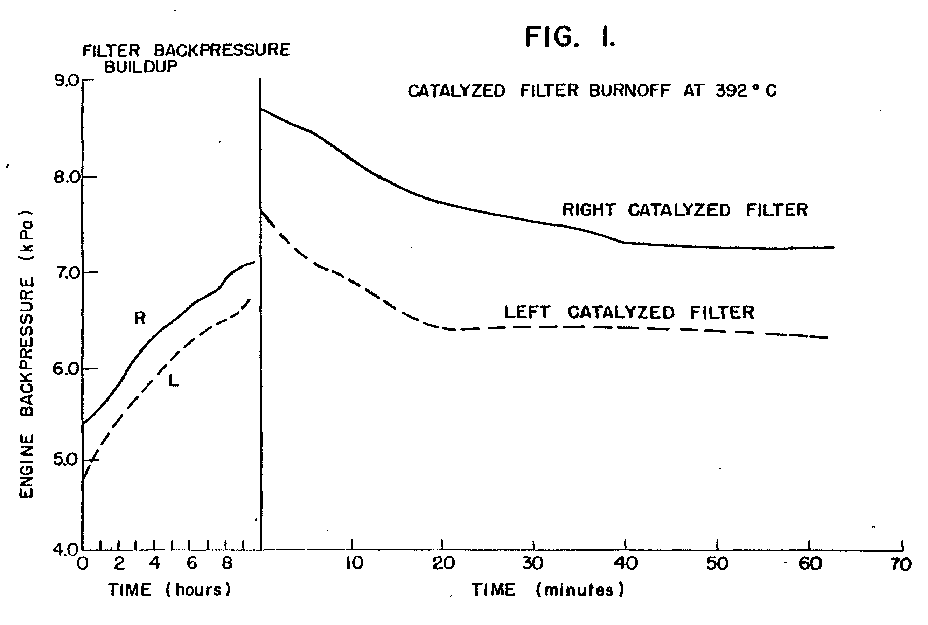

Figures 1—3 show a graph wherein the time of exhaust gas flow through the right and left catalyzed filters is plotted on the horizontal axis and backpressure buildup in the catalyzed filters due to particulate accumulation is plotted on the vertical axis. The curves are plotted from actual data.

Figure 1 illustrates graphically that at an exhaust gas temperature of 260°C, there is a continual buildup of backpressure in the catalyzed filters indicating the accumulation of particulate in the filters after 8 hours. When the load on the engine is increased to raise the temperature to 392°C, the backpressure in both the right and left filter elements declines rapidly, i.e., within 20—40 minutes, indicating a burn-off of particulate at a temperature substantially below the normal ignition and incineration temperature (550°C) of the particulate. The data plotted in Figure 1 clearly demonstrates that the presence of the catalyst in the filter element lowers the temperature at which regeneration of the filter can be accomplished, the steady state backpressure being fairly close to the backpressures existing in the clean filters. For example, an examination of the curves in Figure 1 indicates that the steady state backpressure of the right filter after 40 minutes exposure to exhaust gas heated to 392°C is about 7.5 kPa as compared to 6.3 kPa for the clean filter, and the steady state backpressure for the left filter after 20 minutes exposure to the 392°C exhaust gas was 6.5 kPa after 20 minutes as compared to 5.3 kPa for the clean filter.

Example III

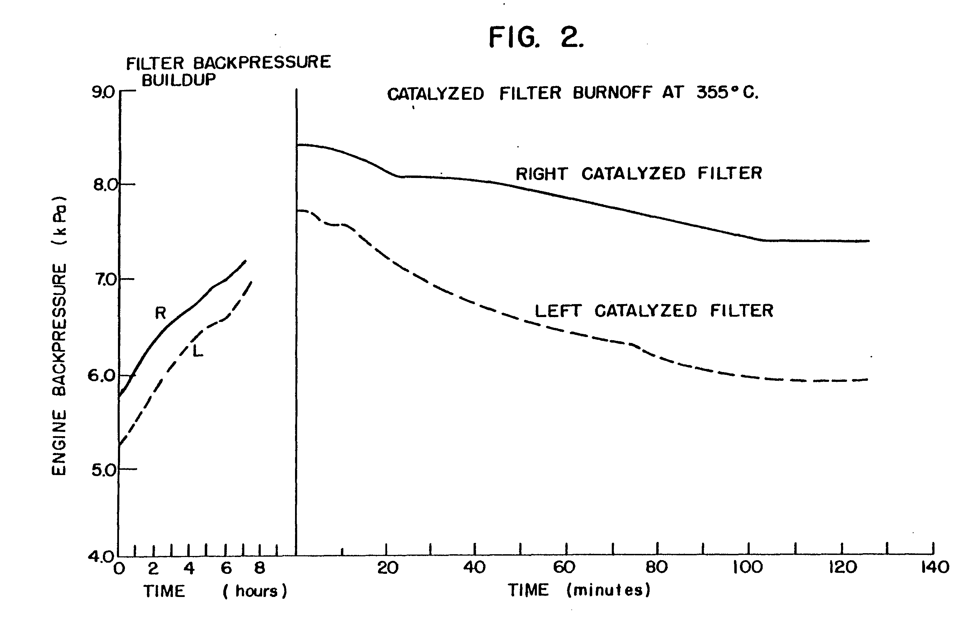

The procedure of Example II was repeated with the exception that for the burn-off cycle, the engine speed was 2240 rpm and the torque was 325 N.m. which conditions created an exhaust temperature of 355°C. At this exhaust temperature burn-off to a steady state backpressure required approximately 105 minutes for both the right and left catalyzed filters as indicated by the curves plotted in Figure 2. The buildup of backpressure for the right catalyzed filter was at 0.200 kPa/hour and 0.243 kPa/hour for the left catalyzed filter. The curves in Figure 2 indicate that at an exhaust temperature of 355°C, (i.e., 155°C less than the minimum ignition temperature of the particulate with an uncatalyzed filter), substantial burn-off of particulate accumulated in the catalyzed filter is possible within a reasonable period of time, at relatively low exhaust gas temperatures.

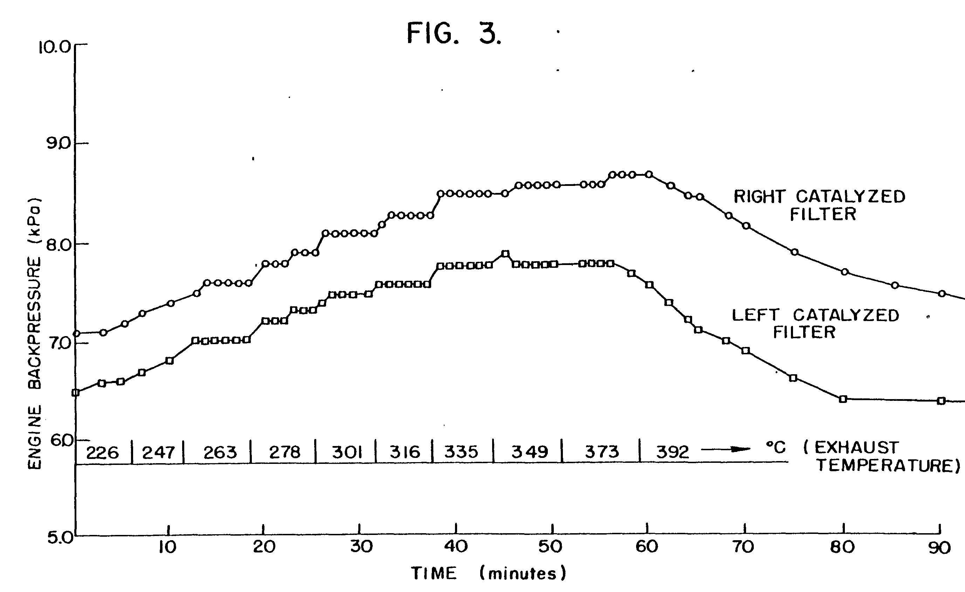

The procedure whereby the regeneration (burn-off) temperature was determined is illustrated in Figure 3. The engine exhaust temperature was raised incrementally from 226°C to 392°C at a constant engine speed of 2200 rpm. At each increasing exhaust temperature increment, the backpressure was observed to increase until a temperature of 392°C was reached, whereupon the backpressure decreased. (The decrease in backpressure started a 373°C for the left catalyzed filter). This continuing decrease in backpressure indicated burnoff of the particulate in the filters.

Example IV

The effect of catalyzing the filter on filter regeneration was further examined by running a simulated work duty cycle of a diesel mine vehicle on the Deutz F8L-413 engine of the type used in Example II, while operating on a computer controlled engine dynamometer. The work cycle used was originally defined in a study at Michigan Technological University and is referred to as the MTU cycle. Previous tests using the Deutz engine and non-catalyzed filters in the MTU cycle indicated that there was no burn-off regeneration of the filter at normal engine exhaust temperature levels, namely about 340°C. This result was consistent with prior studies that a mninimum temperature of 510°C was necessary to initiate regeneration of non-catalyzed filters.

In the present Example, the MTU cycle was operated at several engine exhaust temperatures extending over a narrow range of 322°C—362°C to simulate the effect of a series of actual engine operating conditions on the catalyzed filter so as to more precisely identify the temperature at which burnoff regeneration would occur with the catalyzed particulate filters of the present invention.

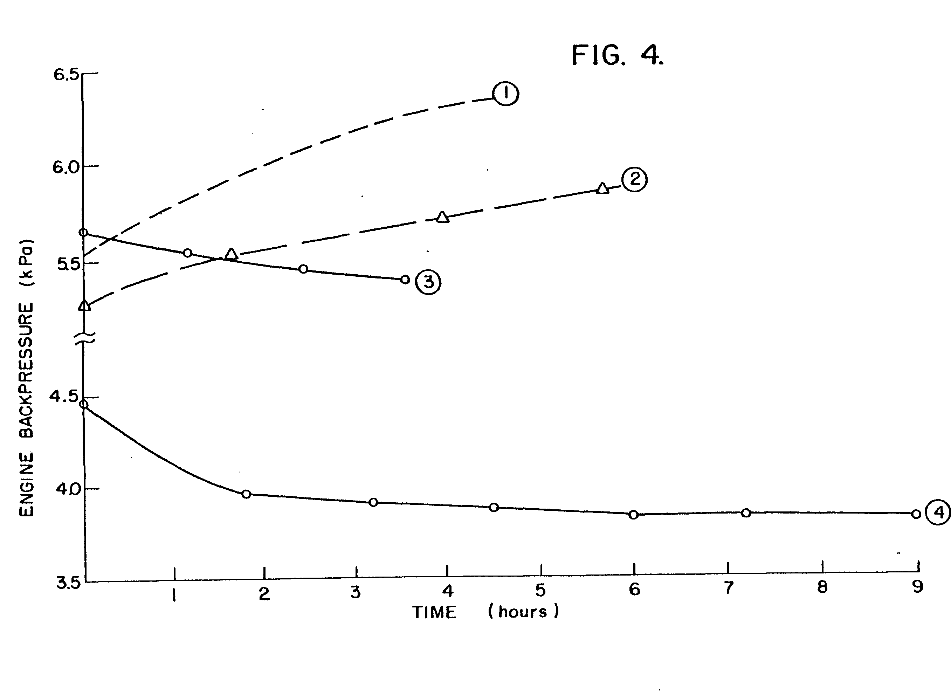

To vary the exhaust temperatures in the test, the temperature of the intake air to the engines was varied to achieve the desired range of exhaust temperatures. The increase in combustion air temperature caused a corresponding increase in the exhaust gas temperature. The varying exhaust temperatures designated as Tests 1—4 are recorded in Table II below. A catalyzed filter loaded with particulate was placed in the filter housing mounted downstream of both right and left exhaust manifolds of the test diesel engine. The MTU cycle, which has a duration of 2.5 minutes was run repeatedly without interruption over a time period of 3.5 to 9.5 hours as indicated in Figure 4. The curves of engine backpressure represent the average value of the right and left engine back pressures.

TABLE II

| Test No. | Exhaust temp. °C | Buildup rate kPa/hour |
|----------|------------------|------------------------|
| 1 | 322 | 0.181 |
| 2 | 338 | 0.103 |
| 3 | 354 | — |
| 4 | 354 | — |

The curves plotted in Figure 4, show the change in backpressure experienced over a 3.5 to 9.5 hour period at each of the exhaust temperatures listed in Table II.

As is apparent from an examination of Figure 4, the backpressures indicated at the lower exhaust gas temperatures, i.e., test numbers 1 and 2 continued to rise over the test period, indicating gradual plugging of the catalyzed filter with particulate, whereas at the higher exhaust gas temperatures (354°C), test numbers 3—4, the backpressure declined indicating that at temperatures of at least 156°C below the normal ignition temperature of the particulate, burn-off of particulate was possible with the catalyzed filter.

The gaseous emissions from the diesel engine exhaust pipe expelled into the atmosphere over the MTU cycle with the catalyzed filter operated at an exhaust gas temperature of 354°C are recorded in Table III below. The gaseous emissions from an exhaust pipe not equipped with a particulate filter are also recorded in Table III under the designation "No Filter".

TABLE III

| | CO ppm | THC* ppm | NO ppm | $NO_x$ ppm | $NO_2$ ppm |
|---|--------|----------|--------|------------|------------|
| Catalyzed filter | 5 | 41 | 326 | 403 | 77 |
| No filter | 113 | 84 | 417 | 460 | 43 |

*Total hydrocarbons

The data recorded in Table III indicate that the presence of the catalyzed particulate filter in the exhaust system of a diesel engine has a generally positive effect on reducing the gaseous emulsions of the system.

While specific components of the present system are defined above, many other variables may be introduced which may in any way affect, enhance or otherwise improve the system of the present invention. These are intended to be included herein.

Although variations are shown in the present application, many modifications and ramifications will occur to those skilled in the art upon a reading of the present disclosure. These, too, are intended to be included herein.

**Claims**

1. A diesel exhaust particulate filter comprising a high temperature resistant filter element having porous walls adapted to filter particulates present in the exhaust gases of diesel engines and collect the particulates from the gases flowed through the element on the surfaces of the porous walls, the surfaces of the walls having been first provided with a catalyst comprised of a mixture of a platinum group metal and an alkaline earth metal oxide, which catalyst mixture lowers the temperature at which the collected particulates are ignited and combustion thereof initiated, whereby the particulates are continuously removed by burning with relatively high efficiency and low pressure drop.

2. The filter as defined in Claim 1 wherein the filter is formed of a ceramic material.

3. The filter as defined in Claim 2 wherein the filter is formed of a foamed ceramic material.

4. The filter as defined in Claim 2 wherein the filter is formed of a ceramic monolithic material.

5. The filter as defined in any preceding claim wherein the platinum group metal is platinum.

6. The filter as defined in any preceding claim wherein the alkaline earth metal oxide is magnesium oxide.

7. The filter as defined in Claim 5 wherein the platinum metal is present on the surface of the filter at a concentration of about 5 to about 150 grams per cubic foot (0.177 to 5.297 g/l) of filter volume.

8. The filter as defined in Claim 6 or Claim 7 wherein the alkaline earth metal oxide is present on the surface of the filter at a concentration of about 30 to about 1500 grams per cubic foot (1.06 to 52.97 g/l) of filter volume.

9. The filter as defined in any preceding claim wherein the atomic ratio between the platinum group metal and the alkaline earth metal in the catalyst mixture is about 1:60 to about 1:6.

**Patentansprüche**

1. Filter für Dieselabgas-Feststoffteilchen, umfassend ein hochtemperaturbeständiges Filterelement mit porösen Wänden, das zum Ausfiltrieren von in den Abgasen von Dieselmotoren vorliegenden Feststoffteilchen und zum Sammeln der Feststoffteilchen aus den durch das Element geführten Gasen auf den Oberflächen der porösen Wände geeignet ist, wobei die Oberflächen der Wände zuvor mit einem Katalysator ausgerüstet worden sind, der aus einem Gemisch aus einem Platingruppenmetall und einem Erdalkalimetalloxidbesteht, welches Katalysatorgemisch die Temperatur erniedrigt, bei welcher die gesammelten Teilchen entzündet werden und deren Verbrennung in Gang gesetzt wird, wodurch die Teilchen kontinuierlich durch Verbrennung mit verhältnismäßig hoher Wirksamkeit und geringem Druckabfall entfernt werden.

2. Filter nach Anspruch 1, worin das Filter aus einem keramischen Material besteht.

3. Filter nach Anspruch 2, worin das Filter aus einem Schaumkeramikmaterial besteht.

4. Filter nach Anspruch 2, worin das Filter aus einem monolithischen keramischen Material besteht.

5. Filter nach einem vorstehenden Anspruch, .worin das Platingruppenmetall Platin ist.

6. Filter nach einem vorstehenden Anspruch, worin das Erdalkalimetalloxid Magnesiumoxid ist.

7. Filter nach Anspruch 5, worin das Platinmetall auf der Oberfläche des Filters in einer Konzentration von etwa 5 bis etwa 150 g je Kubikfuß des Filtervolumens (0,177 bis 5,297 g/l) vorliegt.

8. Filter nach Anspruch 6 oder Anspruch 7, worin das Erdalkalimetall—oxid auf der Oberfläche des Filters in einer Konzentration von etwa 30 bis etwa 1.500 g je Kubikfuß des Filtervolumens (1,06 bis 52,97 g/l) vorliegt.

9. Filter nach einem der vorstehenden Anspruch, worin das Atomverhältnis zwischen dem Platingruppenmetall und dem Erdalkalimetall im Katalysatorgemisch etwa 1:60 bis etwa 1:6 beträgt.

**Revendications**

1. Filtre pour particules provenant de l'échappement d'un diesel qui comporte un élément formant filtre résistant aux températures élevées et possédant des parois poreuses appropriées pour filtrer des particules contenues dans les gaz d'échappement de moteurs diesel et pour recueillir les particules provenant des gaz qui se sont écoulés à travers l'élément sur les faces des parois poreuses, les faces de ces parois ayant en premier lieu été pourvues d'un catalyseur composé d'un mélange d'un métal du groupe platine et d'un oxyde de métal alcalino-terreux, mélange catalyseur qui abaisse la température à laquelle les particules recueillies s'enflamment et la combustion de ces dernières commence, si bien que les particules sont enlevées par brûlage avec une efficacité relativement élevée et une faible perte de charge.

2. Filtre selon la revendication 1 dans lequel le filtre est constitué par un matériau céramique.

3. Filtre selon la revendication 2 dans lequel le filtre est constitué par un matériau céramique cellulaire.

4. Filtre selon la revendication 2 dans lequel le filtre est constitué par un matériau céramique monolithique.

5. Filtre selon l'une quelconque des revendications précédentes dans lequel le métal du groupe platine est du platine.

6. Filtre selon l'une quelconque des revendications précédentes dans lequel l'oxyde de métal alcalino-terreux est de l'oxyde de magnésium.

7. Filtre selon la revendication 5 dans lequel le métal platine est présent à la surface du filtre avec une concentration comprise entre environ 0,177 et environ 5,297 g/l (5 et 150 grammes par pied cubique) de volume de filtre.

8. Filtre selon la revendication 6 ou la revendication 7 dans lequel l'oxyde de métal alcalin présent à la surface du filtre a une concentration comprise entre environ 1,06 et environ 52,97 g/l (30 et 1500 grammes par pied cubique) de volume de filtre.

9. Filtre selon l'une quelconque des revendications précédentes dans lequel le rapport atomique entre le métal du groupe platine et le métal alcalino-terreux situés dans le mélange catalyseur a une valeur comprise entre environ 1/60 et environ 1/6.

FIG. 1.

FILTER BACKPRESSURE BUILDUP

CATALYZED FILTER BURNOFF AT 392° C

RIGHT CATALYZED FILTER

LEFT CATALYZED FILTER

ENGINE BACKPRESSURE (kPa)

TIME (hours)

TIME (minutes)

EP 0 160 482 B1

FIG. 2.

EP 0 160 482 B1

FIG. 3.

EP 0 160 482 B1

FIG. 4.

EP 0 160 482 B1